# EUROPEAN PATENT APPLICATION

(11) **EP 4 369 838 A1**
(43) Date of publication of application: **15.05.2024**
(21) Application number: 21948791.5
(22) Date of filing: 07.07.2021
(51) Int. Cl.: H04W 74/08

(54) **SIGNAL PROCESSING METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/105010
(87) International publication number: WO 2023/279293

(57) **Abstract**

Embodiments of the present disclosure relate to the technical field of mobile communications, and provide a signal processing method and apparatus, an electronic device, and a storage medium. The signal processing method is applied to a multi-link access point device, and the method comprises: sending a target radio frame, the target radio frame carrying basic service set (BSS) color disable information of the multi-link access point device so as to indicate whether BSS color is disabled, so that BSS Color is applied to a multi-link scenario; and by means of each BSS being allocated a different color, the system capacity of a wireless network is increased in a dense environment, and frequency reuse between BSSs is increased. Embodiments of the present disclosure provide a means of indicating whether a BSS color value experiences a conflict in a multi-link scenario.

## Description

### TECHNICAL FIELD

The disclosure relates to the field of mobile communication technology, and in particular to a signal processing method and apparatus, an electronic device, and a storage medium.

### BACKGROUND

With the rapid development of mobile communication technology, Wireless Fidelity (Wi-Fi) technology has made great progress in terms of transmission rate and throughput. Currently, Wi-Fi technology is researching content such as 320MHz bandwidth transmission, aggregation and coordination of multiple frequency bands, or the like, and its main application scenarios include video transmission, Augmented Reality (AR), and Virtual Reality (VR).

Specifically, the aggregation and coordination of multiple frequency bands refers to the simultaneous communication between devices in 2.4GHz, 5.8GHz, 6GHz and other frequency bands. For the scenario where devices communicate in multiple frequency bands at the same time, a new Media Access Control (MAC) mechanism is needed to manage. In addition, the aggregation and coordination of multiple frequency bands is expected to support low-latency transmission.

Currently, the aggregation and coordination of multiple frequency bands will support a maximum bandwidth of 320MHz (160MHz+160MHz). In addition, it may also support 240MHz (160MHz+80MHz) and other bandwidths supported by existing standards.

In the currently researched Wi-Fi technology, multi-link communication will be supported. For example, in a wireless local area network (WLAN), a Basic Service Set (BSS) may include an access point (AP) and one or more stations (STAs) communicating with the AP. The AP and the STA may be multi-link devices (MLDs) respectively. The MLD supports the function of simultaneously sending and/or receiving on multiple links at the same time. Therefore, there may be multiple links between the AP MLD and the STA MLD for communication.

In addition, in order to improve spectrum utilization and adapt to a high-density communication environment, a Spatial Reuse (SR) mechanism is introduced. Further, in the SR mechanism, in order to quickly distinguish the respective presentation protocol data unit (PPDU) sent by each BSS, a BSS color value mechanism is used. However, in an Overlapping Basic Service Set (OBSS) environment, there may be a BSS color value collision. Therefore, it is necessary to provide a way to indicate whether there is a BSS color value collision in a multi-link scenario.

### SUMMARY

Embodiments of the disclosure provide a signal processing method and apparatus, an electronic device, and a storage medium, to provide a manner of indicating whether there is a collision in BSS color values in a multi-link scenario.

In one aspect, embodiments of the disclosure provide a signal processing method, performed by a multi-link access point device. The method includes:

sending a target radio frame, in which the target radio frame carries a Basic Service Set (BSS) Color Disable information of the multi-link access point device.

In another aspect, embodiments of the disclosure provide a signal processing method, performed by a station device. The method includes:

receiving a target radio frame sent by a multi-link access point device, in which the target radio frame carries Basic Service Set (BSS) Color Disable information of the multi-link access point device.

In still another aspect, embodiments of the disclosure provide an access point device, in which the access point device is a multi-link access point device. The access point device includes:

a sending module, configured to send a target radio frame, in which the target radio frame carries Basic Service Set (BSS) Color Disable information of the multi-link access point device.

In yet another aspect, embodiments of the disclosure provide a station device. The station device includes: a receiving module, configured to receive a target radio frame sent by a multi-link access point device, in which the target radio frame carries Basic Service Set (BSS) Color Disable information of the multi-link access point device.

In yet another aspect, embodiments of the disclosure provide a signal processing apparatus, applied to a multi-link access point device. The apparatus includes:
a radio frame sending module, configured to send a target radio frame, in which the target radio frame carries Basic Service Set (BSS) Color Disable information of the multi-link access point device.

In yet another aspect, embodiments of the disclosure provide a signal processing apparatus, applied to a station device. The apparatus includes:
a radio frame receiving module, configured to receive a target radio frame sent by a multi-link access point device, in which the target radio frame carries Basic Service Set (BSS) Color Disable information of the multi-link access point device.

Embodiments of the disclosure also provide an electronic device including a memory, a processor and a computer program stored on the memory and executable by the processor. When executing the program, the processor is configured to perform one or more methods according to embodiments of the disclosure.

Embodiments of the disclosure provide a computer-readable storage medium, having a computer program stored thereon. When the computer program is executed by the processor, one or more methods according to embodiments of the disclosure are performed.

In embodiments of the disclosure, when the AP MLD sends the target radio frame to the STA, the BSS Color Disable information is carried in the target radio frame to indicate whether the BSS Color is disabled, such that the BSS Color may be applied in the multi-link scenario and different Colors are assigned to the BSSs, thereby increasing the system capacity of the wireless network in a dense environment and increasing the frequency reuse between the BSSs

The additional aspects and advantages of embodiments of the disclosure will be partially provided in the following description, which will become apparent from the following description or will be understood through the practices disclosed herein.

### BRIEF DESCRIPTION OF THE DRAWINGS

In order to more clearly illustrate the technical solutions of embodiments of the disclosure, the following will briefly introduce the accompanying drawings that need to be used in the description of embodiments of the disclosure. Obviously, the accompanying drawings in the following description are only some embodiments of the disclosure, for those skilled in the art, other drawings may also be obtained according to these drawings without paying creative labor.
FIG. 1 is a first flowchart illustrating a signal processing method according to embodiments of the disclosure.
FIG. 2 is a schematic diagram of a first example according to embodiments of the disclosure.
FIG. 3 is a second flowchart illustrating a signal processing method according to embodiments of the disclosure.
FIG. 4 is a third flowchart illustrating a signal processing method according to embodiments of the disclosure.
FIG. 5 is a fourth flowchart illustrating a signal processing method according to embodiments of the disclosure.
FIG. 6 is a schematic diagram illustrating an access point device according to embodiments of the disclosure.
FIG. 7 is a schematic diagram illustrating a station device according to embodiments of the disclosure.
FIG. 8 is a schematic diagram illustrating an electronic device according to embodiments of the disclosure.

### DETAILED DESCRIPTION

The term "and/or" in embodiments of the disclosure describes an association relationship of contextual objects, indicating that there may be three relationships. For example, A and/or B means only A, only B, and both A and B. The character "/" generally indicates that the contextual objects are an "or" relationship.

The term "multiple (or a plurality of)" in embodiments of the disclosure refers to two or more, and other quantifiers are similar.

The following will clearly and completely describe the technical solutions according to embodiments of the disclosure with reference to the accompanying drawings in embodiments of the disclosure. Obviously, embodiments described here are only some of embodiments of the disclosure, not all of them. Based on embodiments of the disclosure, all other embodiments obtained by persons of ordinary skill in the art without making creative efforts belong to the protection scope of the disclosure.

Embodiments of the disclosure provide a signal processing method and device, an electronic device, and a storage medium, so as to provide a manner of indicating whether there is a BSS color value collision in a multi-link scenario.

The method and the device are conceived based on the same application. Since the principle of solving problems of the method and the device is similar, the implementation of the device and the method may be referred to each other, and the repetition will not be repeated.

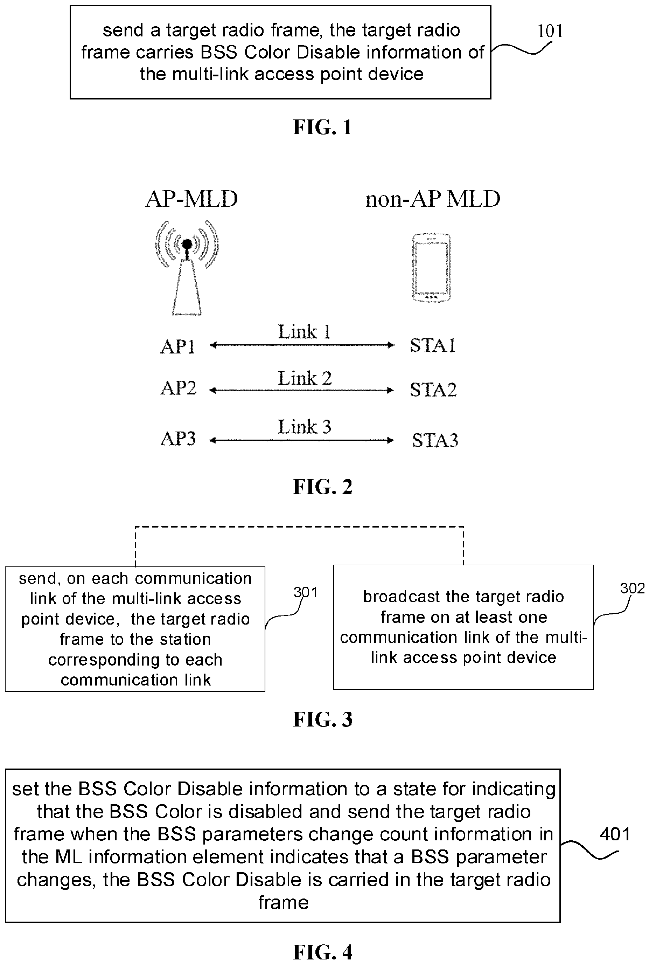

As illustrated in FIG. 1, embodiments of the disclosure provide a signal processing method. In an example, the method may be performed by a multi-link access point (AP or AP MLD) device. The method may include the following.

In block 101, a target radio frame is sent. The target radio frame carries Basic Service Set (BSS) Color Disable information of the multi-link access point device.

In embodiments of the disclosure, the access point (AP) and the station (STA) may be devices supporting multiple links and they are represented as, for example, AP MLD and non-AP MLD respectively. For ease of description, in the following, an example in which one AP communicates with one STA through multiple links is mainly described. However, embodiments of the disclosure are not limited thereto.

As a first example, in FIG. 2, the "AP MLD" may represent an access point supporting a multi-link communication function, and the "non-AP MLD" may represent a station supporting a multi-link communication function. As illustrated in FIG. 2, the AP MLD may work on three links, such as AP1, AP2 and AP3 shown in FIG. 2, and the APs may work on Link 1, Link 2 and Link 3 respectively. The non-AP MLD may works on three links, such as STA1, STA2 and STA3 shown in FIG. 2, the STA1 works on Link 1, the STA2 works on Link 2, and the STA3 works on Link 3. In the example of FIG. 2, it is assumed that the AP1 communicates with the STA1 through the corresponding first link (e.g., Link 1), the AP2 communicates with the STA2 through the corresponding second link (e.g., Link 2), and the AP3 communicates with the STA3 through the third link (e.g., Link 3). In addition, the Link 1 to the Link 3 may be links at different frequencies, such as links at 2.4GHz, 5GHz, and 6GHz. Or, the Link 1 to the Link 3 may be links with the same or different bandwidths at the 2.4GHz. In addition, multiple channels may exist under each link. It is understandable that the communication scenario shown in FIG. 2 is only an example and the concept of the disclosure is not limited thereto. For example, the AP MLD may be connected to multiple non-AP MLDs. Or, under each link, the AP may communicate with multiple other types of stations.

In the multi-link scenario, in order to adapt to the communication in a dense environment, the spatial reuse (SR) mechanism is adopted. In order to quickly distinguish the presentation protocol data units (PPDUs) sent by the BSSs, the BSS color value mechanism is used. However, there may be a BSS color value collision. Specifically, in the half-duplex communication mechanism, only one device may perform the transmission on the network at a time. When a node detects that the channel is busy, the node needs to postpone its own transmission until the channel is idle. Multiple APs and STAs may deploy on the same channel and perform contention transmission to form the OBSS. In the OBSS, such interference on the same channel is co-channel interference (CCI). The BSS Coloring is a way to improve the space reuse rate of the OBSS and reduce the MAC layer competition overhead caused by the overlapping BSS. On the one hand, the BSS Coloring aims to improve spatial multiplexing; on the other hand, the BSS Coloring avoids the reduction of the physical layer transmission rate between nodes due to the interference between the BSSs, thereby reducing the Modulation and Coding Scheme (MCS) value. Specifically, by means of the BSS Coloring, the BSSs are distinguished by adding a field (namely, the BSS Coloring field) to the physical layer (PHY) header, so that when the nodes perform the competition, the competition behavior of the MAC layer is assigned based on the BSS Coloring field detected in the physical layer header. If the BSS Colorings of the APs are the same, a BSS Coloring collision occurs, that is, a color collision.

The BSS Color Disable information is used for indicating whether the color of the BSS to which the AP belongs is disabled. For example, after detecting a BSS color collision with the OBSS, the BSS Color Disable information shall be set to a disabled state to notify other STAs in the BSS that the BSS color is disabled; otherwise, the BSS Color Disabled information shall be set to an available state.

In embodiments of the disclosure, when the AP MLD sends the target radio frame to the STA, the target radio frame carries the BSS Color Disable information to indicate whether the BSS Color is disabled, so that the BSS Color may be applied in a multi-link scenario and different colors are assigned to the BSSs, thereby increasing the system capacity of the wireless network in a dense environment and increasing the frequency reuse between the BSSs. Embodiments of the disclosure provides a manner of indicating whether there is a BSS color value collision in a multi-link scenario.

As illustrated in FIG. 3, embodiments of the disclosure also provide a signal processing method. In some examples, the method may be performed by an AP. The AP includes a multi-link device (AP MLD). The method may include a block 301 and/or a block 302.

In block 301, the target radio frame is sent, on each communication link of the multi-link access point device, to a respective station corresponding to each communication link.

The AP MLD broadcasts the target radio frame on each communication link of the multi-link access point device respectively. The BSS Color Disable information is carried in the target radio frame to indicate whether the BSS Color is disabled. For example, after a BSS color collision with the OBSS is detected, the BSS Color Disabled information shall be set to a disabled state to notify other STAs in the BSS that the BSS color has been disabled; otherwise, the BSS Color Disabled information shall be set to an available state.

In block 302, the target radio frame is broadcast on at least one communication link of the multi-link access point device.

The AP MLD may broadcast, on at least one communication link between the AP MLD and the STA, the target radio frame of another communication link. The BSS Color Disable information of another communication link is carried in the target radio frame to save signaling overhead. The BSS Color Disable information is carried in the target radio frame to indicate whether the BSS Color is disabled, so that the BSS Color may be applied in a multi-link scenario, thereby increasing the system capacity of the wireless network in a dense environment and increasing the frequency reuse between BSSs.

In an embodiment, when sending the target radio frame to the respective station corresponding to the communication link, that is, when sending the target radio frame on each communication link, the BSS Color Disable information is carried in a multi-link (ML) information element and the ML information element is carried in the target radio frame.

The ML information element identifies the capability value(s) of the AP on the multiple links. As a first example, the format of the ML information element is shown in Table 1, including element identifier (ID), length, element ID extension, and common information.

**Table 1:**

| Info content | Element ID | Length | Element ID Extension | Multi-Link Control | Common info | Link info |
|---|---|---|---|---|---|---|
| Octets | 1 | 1 | 1 | 2 | variable | variable |

Further, the BSS Color Disable information may be carried in a Multi-Link Control field. The format of the Multi-Link Control information is shown in Table 2 below. The SR indication information is carried in the Multi-Link Control information, for example, carried in the Reserved field.

**Table 2:**

| content | Type | Reserved | Presence Bitmap |
|---|---|---|---|
| Bits | 3 | 1 | 12 |
| Bits order | B0 to B2 | B3 to B4 | B5 to B15 |

In an embodiment, the BSS Color Disable information is carried in the per-STA profile subelement or Link info subelement of the ML information element.

Or, the BSS Color Disable information may be carried in the Link info subelement of the ML information element. In addition, the ML information element includes not only the subelements shown in Table 1 but also the per -STA profile subelement. As a second example, the format of the per-STA profile subelement is shown in Table 3.

**Table 3:**

| Info content | Subelement ID | Length | SAT Control | SAT info | STA profile |
|---|---|---|---|---|---|
| Octets | 1 | 1 | 2 | variable | variable |

In Table 3, the BSS Color Disable information may be carried in the STA profile field.

In an embodiment, when broadcasting the target radio frame, that is, when broadcasting, through at least one communication link, the target radio frame of another communication link, the BSS Color Disable information is carried in an enhancements for extremely high throughput (EHT) operation element, and the EHT operation element is carried in the target radio frame.

As a third example, the format of the Enhancements for extremely high throughput (EHT) operation element is shown in Table 4.

**Table 4:**

| Info content | Element ID | Length | Element ID Extension | EHT Operation Information |
|---|---|---|---|---|
| Octets | 1 | 1 | 1 | |

Further, in an embodiment, the BSS Color Disable information is carried in the EHT operation information subelement (i.e., the EHT Operation Information shown in Table 4) of the EHT operation element.

As illustrated in FIG. 4, embodiments of the disclosure further provide a signal processing method. In some examples, the method may be performed by an AP. The AP includes a multi-link device (AP MLD). The method may include the following.

In block 401, when the BSS parameters change count information in the ML information element indicates that a BSS parameter changes, the BSS Color Disable information is set to a state indicating that the BSS Color is disabled, and the target radio frame is sent. The target radio frame carries the BSS Color Disable information.

The BSS parameters change count information is information in a Present Bitmap subfield in the ML control field in the ML information element. As a fourth example, the format of the Present Bitmap is shown in Table 5, and the BSS Parameters Change Count is the subelement of the Present Bitmap.

**Table 5:**

| content | MLD Mac Address | Link ID Info | BSS Parameters Change Count | Medium Synchronization Delay Information | Enhanced Multi-Link Capabilities | MLD Capabilities |
|---|---|---|---|---|---|---|
| Bits | 1 | 1 | 1 | 1 | 1 | 1 |

In this example, the value "1" indicates the disabled state of the BSS Color. When the value of the BSS Parameter Change Count Present is set to 1, it indicates that the value of BSS Parameters Change Count in the Common Info field in the ML information element has changed and increased by 1. Then in the ML information element, the value of BSS color disable is set to 1, indicating that the BSS Color of the current link is disabled, so that the BSS Color may be applied in a multi-link scenario and different Colors are assigned to the BSSs to increase the system capacity of the wireless network in the dense environment and increase frequency reuse between BSSs.

In an embodiment, before sending the target radio frame, the method includes: determining the target radio frame.

The AP determines (or generates) the target radio frame. In some examples, the target radio frame may be for example the Beacon frame, the Probe Response frame, the ML Probe Response frame, or the like. The AP determines the target radio frame and carries the BSS Color Disable information in the target radio frame to indicate whether the BSS Color is disabled, so that BSS Color may be applied in the multi-link scenario.

In an embodiment, the target radio frame is at least one of a Beacon frame, a Probe Response frame, an ML Probe Response frame, an Association Response frame, or a Reassociation Response frame. It is understandable that, the target radio frame may also be in other forms, which are not specifically limited in embodiments of the disclosure.

In embodiments of the disclosure, when the AP MLD sends the target radio frame to the STA, the BSS Color Disable information is carried in the target radio frame to indicate whether the BSS Color is disabled, so that the BSS Color may be applied in a multi-link scenario. By assigning different Colors to the BSSs, the system capacity of the wireless network in a dense environment may be increased and the frequency reuse between the BSSs is increased. Embodiments of the disclosure provide a manner of indicating whether there is a BSS color value collision in the multi-link scenario.

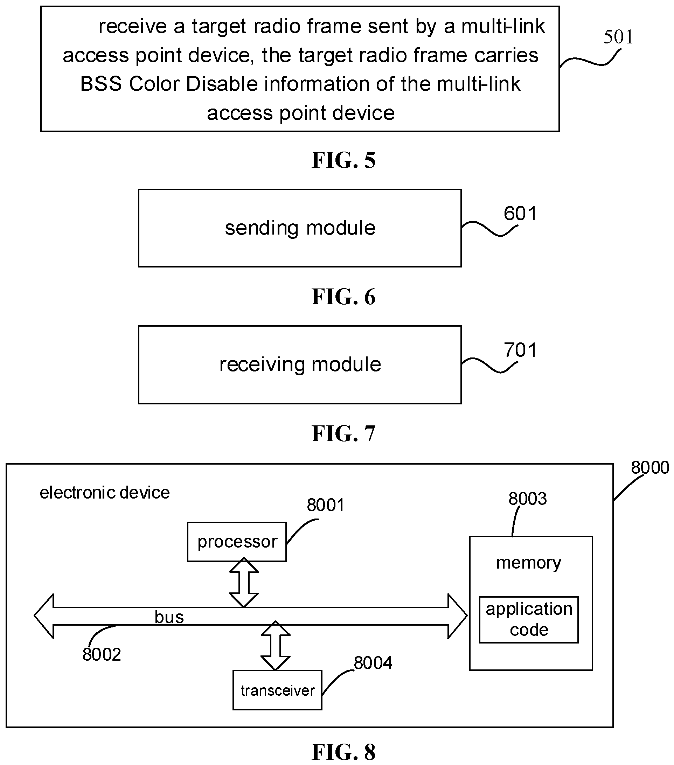

As illustrated in FIG. 5, embodiments of the disclosure further provide a signal processing method. The method is performed by a station (STA) device. The STA may be a device providing voice and/or data connectivity to users, a handheld device with a wireless connection function, or a processing device connected to a wireless modem. In a Wireless Local Area Network (WLAN), a BSS may include an AP and one or more STAs communicating with the AP. The AP communicates with the STA(s) through communication link(s).

The methods includes the following.

In block 501, a target radio frame sent by a multi-link access point device is received. The target radio frame carries BSS Color Disable information of the multi-link access point device.

The STA receives the target radio frame sent by the AP. In some examples, the target radio frame is a Beacon frame, a Probe Response frame, an ML Probe Response frame, or the like. The AP and the STA may be devices supporting multiple links, and they may be represented as, for example, AP MLD and non-AP MLD respectively. For ease of description, in the following, an example in which one AP communicates with one STA through multiple links is mainly described. However, embodiments of the disclosure are not limited thereto.

As a first example, in FIG. 2, the "AP MLD" may represent an access point supporting a multi-link communication function, and the "non-AP MLD" may represent a station supporting a multi-link communication function. As illustrated in FIG. 2, the AP MLD may work on three links, such as AP1, AP2 and AP3 shown in FIG. 2, and the APs may work on Link 1, Link 2 and Link 3 respectively. The non-AP MLD may works on three links, such as STA1, STA2 and STA3 shown in FIG. 2, the STA1 works on Link 1, the STA2 works on Link 2, and the STA3 works on Link 3. In the example of FIG. 2, it is assumed that the AP1 communicates with the STA1 through the corresponding first link (e.g., Link 1), the AP2 communicates with the STA2 through the corresponding second link (e.g., Link 2), and the AP3 communicates with the STA3 through the third link (e.g., Link 3). In addition, the Link 1 to the Link 3 may be links at different frequencies, such as links at 2.4GHz, 5GHz, and 6GHz. Or, the Link 1 to the Link 3 may be links with the same or different bandwidths at the 2.4GHz. In addition, multiple channels may exist under each link. It is understandable that the communication scenario shown in FIG. 2 is only an example and the concept of the disclosure is not limited thereto. For example, the AP MLD may be connected to multiple non-AP MLDs. Or, under each link, the AP may communicate with multiple other types of stations.

In the multi-link scenario, in order to adapt to the communication in a dense environment, the spatial reuse (SR) mechanism is adopted. In order to quickly distinguish the presentation protocol data units (PPDUs) sent by the BSSs, the BSS color value mechanism is used. However, there may be a BSS color value collision. Specifically, in the half-duplex communication mechanism, only one device may perform the transmission on the network at a time. When a node detects that the channel is busy, the node needs to postpone its own transmission until the channel is idle. Multiple APs and STAs may deploy on the same channel and perform contention transmission to form the OBSS. In the OBSS, such interference on the same channel is co-channel interference (CCI). The BSS Coloring is a way to improve the space reuse rate of the OBSS and reduce the MAC layer competition overhead caused by the overlapping BSS. On the one hand, the BSS Coloring aims to improve spatial multiplexing; on the other hand, the BSS Coloring avoids the reduction of the physical layer transmission rate between nodes due to the interference between the BSSs, thereby reducing the Modulation and Coding Scheme (MCS) value. Specifically, by means of the BSS Coloring, the BSSs are distinguished by adding a field (namely, the BSS Coloring field) to the physical layer (PHY) header, so that when the nodes perform the competition, the competition behavior of the MAC layer is assigned based on the BSS Coloring field detected in the physical layer header. If the BSS Colorings of the APs are the same, a BSS Coloring collision occurs, that is, a color collision.

The BSS Color Disable information is used for indicating whether the color of the BSS to which the AP belongs is disabled. For example, after detecting a BSS color collision with the OBSS, the BSS Color Disable information shall be set to a disabled state to notify other STAs in the BSS that the BSS color is disabled; otherwise, the BSS Color Disabled information shall be set to an available state.

In embodiments of the disclosure, the STA receives the target radio frame sent by the AP, and the target radio frame carries the BSS Color Disable information to indicate whether the BSS Color is disabled, so that BSS Color may be applied in a multi-link scenario and different colors are assigned to the BSSs. Therefore, the system capacity of the wireless network in a dense environment may be increased and the frequency reuse between the BSSs may be increased. Embodiments of the disclosure provides a manner of indicating whether there is a BSS color value collision in a multi-link scenario.

In an embodiment, receiving the target radio frame sent by the multi-link access point device includes: receiving the target radio frame sent by the multi-link access point device on a communication link between the multi-link access point device and the station; and/or receiving the target radio frame broadcast by the multi-link access point device.

In an embodiment, when receiving the target radio frame sent by the multi-link access point device on the communication link between the multi-link access point device and the station, the BSS Color Disable information is carried in an ML information element, and the ML information element is carried in the target radio frame.

In an embodiment, the BSS Color Disable information is carried in the per-STA profile subelement or Link info subelement of the ML information element.

In an embodiment, when receiving the target radio frame broadcast by the multi-link access point device, the BSS Color Disable information is carried in the enhancements for extremely high throughput (EHT) operation element, and the EHT operation element is carried in the target radio frame.

In an embodiment, the BSS Color Disable information is carried in an EHT operation information subelement of the EHT operation element.

In embodiments of the disclosure, the STA receives the target radio frame sent by the AP, and the target radio frame carries the BSS Color Disable information to indicate whether the BSS Color is disabled, so that the BSS Color may be applied in a multi-link scenario and different Colors are assigned to the BSSs, thereby increasing the system capacity of the wireless network in the dense environment and increasing the frequency reuse between the BSSs.

Based on the same principle as the methods according to embodiments of the disclosure, embodiments of the disclosure also provide an access point device. In the WLAN, a BSS includes an AP and one or more STAs communicating with the AP. One BSS may be connected to the DS through its AP, and then connected to another BSS to form an Extended Service Set (ESS). The AP communicates with the STA(s) through the communication link(s). As illustrated in FIG. 6, the access point device includes a sending module 601.

The sending module 601 is configured to send a target radio frame. The target radio frame carries BSS Color Disable information of the multi-link access point device.

In some examples, the target radio frame is, for example, a Beacon frame, a Probe Response frame, an ML Probe Response frame, or the like. AP and STA may be devices supporting multiple links, and they may be represented as, for example, AP MLD and non-AP MLD respectively. For ease of description, in the following, an example in which one AP communicates with one STA under multiple links is mainly described. However, embodiments of the disclosure are not limited thereto.

As a first example, in FIG. 2, the "AP MLD" may represent an access point supporting a multi-link communication function, and the "non-AP MLD" may represent a station supporting a multi-link communication function. As illustrated in FIG. 2, the AP MLD may work on three links, such as AP1, AP2 and AP3 shown in FIG. 2, and the APs may work on Link 1, Link 2 and Link 3 respectively. The non-AP MLD may works on three links, such as STA1, STA2 and STA3 shown in FIG. 2, the STA1 works on Link 1, the STA2 works on Link 2, and the STA3 works on Link 3. In the example of FIG. 2, it is assumed that the AP1 communicates with the STA1 through the corresponding first link (e.g., Link 1), the AP2 communicates with the STA2 through the corresponding second link (e.g., Link 2), and the AP3 communicates with the STA3 through the third link (e.g., Link 3). In addition, the Link 1 to the Link 3 may be links at different frequencies, such as links at 2.4GHz, 5GHz, and 6GHz. Or, the Link 1 to the Link 3 may be links with the same or different bandwidths at the 2.4GHz. In addition, multiple channels may exist under each link. It is understandable that the communication scenario shown in FIG. 2 is only an example and the concept of the disclosure is not limited thereto. For example, the AP MLD may be connected to multiple non-AP MLDs. Or, under each link, the AP may communicate with multiple other types of stations.

In the multi-link scenario, in order to adapt to the communication in a dense environment, the spatial reuse (SR) mechanism is adopted. In order to quickly distinguish the presentation protocol data units (PPDUs) sent by the BSSs, the BSS color value mechanism is used. However, there may be a BSS color value collision. Specifically, in the half-duplex communication mechanism, only one device may perform the transmission on the network at a time. When a node detects that the channel is busy, the node needs to postpone its own transmission until the channel is idle. Multiple APs and STAs may deploy on the same channel and perform contention transmission to form the OBSS. In the OBSS, such interference on the same channel is co-channel interference (CCI). The BSS Coloring is a way to improve the space reuse rate of the OBSS and reduce the MAC layer competition overhead caused by the overlapping BSS. On the one hand, the BSS Coloring aims to improve spatial multiplexing; on the other hand, the BSS Coloring avoids the reduction of the physical layer transmission rate between nodes due to the interference between the BSSs, thereby reducing the Modulation and Coding Scheme (MCS) value. Specifically, by means of the BSS Coloring, the BSSs are distinguished by adding a field (namely, the BSS Coloring field) to the physical layer (PHY) header, so that when the nodes perform the competition, the competition behavior of the MAC layer is assigned based on the BSS Coloring field detected in the physical layer header. If the BSS Colorings of the APs are the same, a BSS Coloring collision occurs, that is, a color collision.

The BSS Color Disable information is used for indicating whether the color of the BSS to which the AP belongs is disabled. For example, after detecting a BSS color collision with the OBSS, the BSS Color Disable information shall be set to a disabled state to notify other STAs in the BSS that the BSS color is disabled; otherwise, the BSS Color Disabled information shall be set to an available state.

In an embodiment, the sending module 601 includes a first sending submodule.

The first sending submodule is configured to send, on each communication link of the multi-link access point device, the target radio frame to a respective station corresponding to each communication link; and/or the second sending submodule is configured to broadcast the target radio frame on at least one communication link.

In an embodiment, the BSS Color Disable information is carried in an ML information element, and the ML information element is carried in the target radio frame.

In an embodiment, the BSS Color Disable information is carried in a per-STA profile subelement or a Link info subelement of the ML information element.

In an embodiment, the BSS Color Disable information is carried in an enhancements for extremely high throughput (EHT) operation element, and the EHT operation element is carried in the target radio frame.

In an embodiment, the BSS Color Disable information is carried in the EHT operation information subelement of the EHT operation element.

In an embodiment, the access point device includes a determining module.

The determining module is configured to determine the target radio frame.

In an embodiment, the sending module 601 includes a third sending submodule.

The third sending submodule is configured to set the BSS Color Disable information to a state indicating that the BSS Color is disabled and send the target radio frame, when the BSS parameters change count information in the ML information element indicates that the BSS parameter changes.

In embodiments of the disclosure, when sending by the sending module 601 the target radio frame to the STA, the BSS Color Disable information is carried in the target radio frame to indicate whether the BSS Color is disabled, so that the BSS Color may be applied in a multi-link scenario, and different Colors are assigned to the BSSs, thereby increasing the system capacity of the wireless network in a dense environment and increasing the frequency reuse between the BSSs.

Embodiments of the disclosure further provide a signal processing device. The device is applied to a multi-link access point device. The signal processing device includes a wireless frame sending module.

The wireless frame sending module is configured to send a target radio frame. The target radio frame carries BSS Color Disable information of the multi-link access point device.

The apparatus also includes other modules of the access point device in the foregoing embodiments, which will not be repeated here.

As illustrated in FIG. 7, embodiments of the disclosure further provide a station (STA) device. The STA may be a device providing voice and/or data connectivity to users, a handheld device with a wireless connection function, or a processing device connected to a wireless modem. In a WLAN, a BSS may include an AP and one or more STAs communicating with the AP. The AP communicates with the STA(s) through communication link(s).

The station device includes a receiving module 701.

The receiving module 701 is configured to receive a target radio frame sent by a multi-link access point device. The target radio frame carries BSS Color Disable information of the multi-link access point device.

The STA receives the target radio frame sent by the AP. In some examples, the target radio frame is, for example, a Beacon frame, a Probe Response frame, an ML Probe Response frame, or the like. The AP and the STA may be devices supporting multiple links, and they may be represented as, for example, AP MLD and non-AP MLD respectively. For ease of description, in the following, an example in which one AP communicates with one STA through multiple links is mainly described. However, embodiments of the disclosure are not limited thereto.

As a first example, in FIG. 2, the "AP MLD" may represent an access point supporting a multi-link communication function, and the "non-AP MLD" may represent a station supporting a multi-link communication function. As illustrated in FIG. 2, the AP MLD may work on three links, such as AP1, AP2 and AP3 shown in FIG. 2, and the APs may work on Link 1, Link 2 and Link 3 respectively. The non-AP MLD may works on three links, such as STA1, STA2 and STA3 shown in FIG. 2, the STA1 works on Link 1, the STA2 works on Link 2, and the STA3 works on Link 3. In the example of FIG. 2, it is assumed that the AP1 communicates with the STA1 through the corresponding first link (e.g., Link 1), the AP2 communicates with the STA2 through the corresponding second link (e.g., Link 2), and the AP3 communicates with the STA3 through the third link (e.g., Link 3). In addition, the Link 1 to the Link 3 may be links at different frequencies, such as links at 2.4GHz, 5GHz, and 6GHz. Or, the Link 1 to the Link 3 may be links with the same or different bandwidths at the 2.4GHz. In addition, multiple channels may exist under each link. It is understandable that the communication scenario shown in FIG. 2 is only an example and the concept of the disclosure is not limited thereto. For example, the AP MLD may be connected to multiple non-AP MLDs. Or, under each link, the AP may communicate with multiple other types of stations.

In the multi-link scenario, in order to adapt to the communication in a dense environment, the spatial reuse (SR) mechanism is adopted. In order to quickly distinguish the presentation protocol data units (PPDUs) sent by the BSSs, the BSS color value mechanism is used. However, there may be a BSS color value collision. Specifically, in the half-duplex communication mechanism, only one device may perform the transmission on the network at a time. When a node detects that the channel is busy, the node needs to postpone its own transmission until the channel is idle. Multiple APs and STAs may deploy on the same channel and perform contention transmission to form the OBSS. In the OBSS, such interference on the same channel is co-channel interference (CCI). The BSS Coloring is a way to improve the space reuse rate of the OBSS and reduce the MAC layer competition overhead caused by the overlapping BSS. On the one hand, the BSS Coloring aims to improve spatial multiplexing; on the other hand, the BSS Coloring avoids the reduction of the physical layer transmission rate between nodes due to the interference between the BSSs, thereby reducing the Modulation and Coding Scheme (MCS) value. Specifically, by means of the BSS Coloring, the BSSs are distinguished by adding a field (namely, the BSS Coloring field) to the physical layer (PHY) header, so that when the nodes perform the competition, the competition behavior of the MAC layer is assigned based on the BSS Coloring field detected in the physical layer header. If the BSS Colorings of the APs are the same, a BSS Coloring collision occurs, that is, a color collision.

The BSS Color Disable information is used for indicating whether the color of the BSS to which the AP belongs is disabled. For example, after detecting a BSS color collision with the OBSS, the BSS Color Disable information shall be set to a disabled state to notify other STAs in the BSS that the BSS color is disabled; otherwise, the BSS Color Disabled information shall be set to an available state.

In an embodiment, the receiving module 701 includes a first receiving submodule.

The first receiving submodule is configured to receive, on a communication link between the station and the multi-link access point device, the target radio frame sent by the multi-link access point device; and/or, the second receiving submodule is configured to receive the target radio frame broadcast by the multi-link access point device.

In an embodiment, the BSS Color Disable information is carried in an ML information element, and the ML information element is carried in the target radio frame.

In an embodiment, the BSS Color Disable information is carried in a per-STA profile subelement or a Link info subelement of the ML information element.

In an embodiment, the BSS Color Disable information is carried in an enhancement for extremely high throughput (EHT) operation element, and the EHT operation element is carried in the target radio frame.

In an embodiment, the BSS Color Disable information is carried in an EHT operation information subelement of the EHT operation element.

In embodiments of the disclosure, the receiving module 701 receives the target radio frame sent by the AP, and the target radio frame carries the BSS Color Disable information to indicate whether the BSS Color is disabled, so that the BSS Color may be applied in a multi-link scenario, and different Colors are assigned to the BSSs, thereby increasing the system capacity of the wireless network in the dense environment and increasing the frequency reuse between the BSSs. Embodiments of the disclosure provide a manner of indicating whether there is a BSS color value collision in a multi-link scenario.

Embodiments of the disclosure further provide a signal processing device. The device is applied to a station device. The signal processing device includes a wireless frame receiving module.

The wireless frame receiving module is configured to receive a target radio frame sent by a multi-link access point device. The target radio frame carries the BSS Color Disable information of the multi-link access point device.

The apparatus also includes other modules of the station device in foregoing embodiments, which will not be described in detail here.

Embodiments of the disclosure further provide an electronic device. As illustrated in FIG. 8, the electronic device 8000 may be a server, including a processor 8001 and a memory 8003. The processor 8001 is connected to the memory 8003, such as through a bus 8002. In some examples, the electronic device 8000 may further include a transceiver 8004. It should be noted that in practical applications, there may be one or more transceivers 8004, and the structure of the electronic device 8000 is not limited thereto in embodiment of the disclosure.

The processor 8001 may be a Central Processing Unit (CPU), a general purpose processor, a Digital Signal Processor (DSP), an Application Specific Integrated Circuit (ASIC), a Field Programmable Gate Array (FPGA), a programmable logic device, a transistor logic device, a hardware component, or any combination thereof, for implementing or performing various logical blocks, modules and circuits described in connection with the disclosure. Or, the processor 8001 may be a combination of computing functions, such as a combination of one or more microprocessors, a combination of DSP and a microprocessor, or the like.

The bus 8002 may include a path for carrying information between the components described above. The bus 8002 may be a Peripheral Component Interconnect (PCI) bus or an Extended Industry Standard Architecture (EISA) bus or the like. The bus 8002 may be an address bus, a data bus, or a control bus. For ease of representation, only one thick line shown in FIG. 8 is used to represent the bus. However, this does not mean that there is only one bus or one type of bus.

The memory 8003 may be a Read Only Memory (ROM) or other types of static storage devices that may store static information and instructions, Random Access Memory (RAM) or other types of dynamic storage devices that may store information and instructions, an Electrically Erasable Programmable Read Only Memory (EEPROM), a Compact Disc Read Only Memory (CD-ROM) or other optical disc storage, an optical disc storage (including compression optical disc, laser disc, optical disc, digital versatile disc, Blu-ray^{™} disc, etc.), a magnetic disk storage medium or other magnetic storage device, or a medium that may be used for carrying or store desired program codes in the form of instructions or data structures and may be accessed by a computer. However, the disclosure is not limited thereto.

The memory 8003 is used for storing application program codes for implementing the solutions of the disclosure, and the execution is controlled by the processor 8001. The processor 8001 is configured to execute the application program codes stored in the memory 8003, so as to implement the contents shown in foregoing method embodiments.

The electronic device is a device selected from a group including, but being not limited to, a mobile terminal, such as a mobile phone, a notebook computer, a digital broadcast receiver, a personal digital assistant (PDA), a tablet computer (e.g., PAD), a portable multimedia player (PMP), a vehicle-mounted terminal (e.g., a vehicle-mounted navigation terminal), and a fixed terminal, such as a digital TV, a desktop computer. The electronic device illustrated in FIG. 8 is only an example and should not limit the functions and use scope of embodiments of the disclosure.

The server according to the disclosure may be an independent physical server, or a cluster or distributed server system composed of multiple physical servers, or a cloud server for providing basic cloud computing services, such as cloud services, cloud databases, cloud computing, cloud functions, cloud storage, network services, cloud communications, middleware services, domain name services, security services, CDN, big data and artificial intelligence platforms. The terminal may be a smart phone, a tablet computer, a laptop computer, a desktop computer, a smart speaker, a smart watch, which is not limited in the disclosure. The terminal and the server may be connected directly or indirectly through wired or wireless communication, which is not limited in the disclosure.

Embodiments of the disclosure provide a computer-readable storage medium, having computer program stored thereon. When the computer program runs on a computer, the computer may perform corresponding contents in foregoing method embodiments.

It is understandable that although various blocks in the flowchart of the accompanying drawings are displayed sequentially according to the arrows, these blocks are not necessarily performed sequentially in the order indicated by the arrows. Unless otherwise specified herein, there is no strict order restriction on the execution of these blocks, and the blocks may be executed in other orders. Moreover, at least some of the blocks in the flowcharts of the accompanying drawings may include multiple sub-blocks or multiple stages, and these sub-blocks or stages are not necessarily executed at the same time, but may be executed at different times, and they are not necessarily performed sequentially. Instead, they may be performed alternately with at least a part of other blocks or sub-blocks or stages of other blocks.

It should be noted that the above-mentioned computer-readable medium in the disclosure may be a computer-readable signal medium or a computer-readable storage medium or any combination of the above two. A computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to, electrical connections with one or more wires, portable computer diskettes, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above. In the disclosure, the computer-readable storage medium may be any tangible medium that contains or stores a program that may be used by or in conjunction with an instruction execution system, apparatus, or device. In the disclosure, the computer-readable signal medium may include a data signal propagated in baseband or as part of a carrier wave carrying computer-readable program code therein. Such propagated data signals may take many forms, including but not limited to electromagnetic signals, optical signals, or any suitable combination of the foregoing. The computer-readable signal medium may be any computer-readable medium other than a computer-readable storage medium, which may transmit, propagate, or transmit a program for use by or in conjunction with an instruction execution system, apparatus, or device. The program code embodied on the computer-readable medium may be transmitted by any appropriate medium, including but not limited to: wires, optical cables, radio frequency (RF), etc., or any suitable combination of the above.

The above-mentioned computer-readable medium may be included in the above-mentioned electronic device, or may exist independently without being incorporated into the electronic device.

The above-mentioned computer-readable medium carries one or more programs. When the above-mentioned one or more programs are executed by the electronic device, the electronic device is caused to perform the methods according to above-mentioned embodiments.

According to an aspect of the disclosure, there is provided a computer program product or a computer program including computer instructions stored in a computer-readable storage medium. The processor of the computer device reads the computer instructions from the computer-readable storage medium, and the processor executes the computer instructions, so that the computer device executes the signal processing methods according to above-mentioned various implementation manners.

The computer program code for carrying out the operations of the disclosure may be written in one or more programming languages, or combinations thereof, including object-oriented programming languages, such as Java, Smalltalk, C++, and conventional Procedural Programming Language, such as "C" or a similar programming language. The program code may execute entirely on the user computer, partly on the user computer as a stand-alone software package, partly on the user computer and partly on a remote computer, or entirely on the remote computer or server. When involving a remote computer, the remote computer may be connected to the user computer through any kind of network, including a local area network (LAN) or a wide area network (WAN), or the remote computer may be connected to an external computer (such as through an Internet connection provided by an Internet service provider).

The flowcharts and block diagrams illustrate the architecture, functionality, and operation of possible implementations of systems, methods and computer program products according to various embodiments of the disclosure. In this regard, each block in a flowchart or block diagram may represent a module, program segment, or portion of code that contains one or more logical functions for implementing specified executable instructions. It should also be noted that, in some alternative implementations, the functions noted in the block may occur out of the order noted in the figures. For example, two blocks shown in succession may, in fact, be executed substantially concurrently, or they may sometimes be executed in the reverse order, depending upon the functionality involved. It should also be noted that each block of the block diagrams and/or flowcharts and combinations of blocks in the block diagrams and/or flowchart may be implemented by a dedicated hardware-based system that performs the specified functions or operations or may be implemented by a combination of dedicated hardware and computer instructions.

The modules involved in embodiments described in the disclosure may be implemented by software or by hardware. The name of the module does not constitute a limitation of the module itself under certain circumstances. For example, the A module may also be described as "the A module for performing the B operation".

The above description only provides preferred embodiments of the disclosure and an illustration of the applied technical principles. Those skilled in the art should understand that the disclosure scope involved in the disclosure is not limited to the technical solution formed by the specific combination of the above-mentioned technical features, but also covers the technical solutions formed by the above-mentioned technical features or other technical solutions formed by any combination of equivalent features. For example, a technical solution formed by replacing the above-mentioned features with (but not limited to) technical features with similar functions disclosed in this disclosure.

## Claims

1. A signal processing method, performed by a multi-link (ML) access point device, comprising:
sending a target radio frame, the target radio frame carrying Basic Service Set (BSS) Color Disable information of the ML access point device.

2. The method of claim 1, wherein sending the target radio frame comprises:
sending, on each communication link of the multi-link access point device, the target radio frame to a respective station (STA) corresponding to each communication link; and/or
broadcasting the target radio frame on at least one communication link of the multi-link access point device.

3. The method of claim 2, wherein in response to sending target radio frame to the respective station corresponding to each communication link,
the BSS Color Disable information is carried in an ML information element, the ML information element being carried in the target radio frame.

4. The method of claim 3, wherein the BSS Color Disable information is carried in a per-STA profile subelement or a Link info subelement of the ML information element.

5. The method of claim 2, wherein in response to broadcasting the target radio frame,
the BSS Color Disable information is carried in an enhancements for extremely high throughput (EHT) operation element, the EHT operation element being carried in the target radio frame.

6. The method of claim 5, wherein the BSS Color Disable information is carried in an EHT operation information subelement of the EHT operation element.

7. The method of claim 1, wherein before sending the target radio frame, the method comprises:
determining the target radio frame.

8. The method of any one of claims 1 to 7, wherein sending the target radio frame comprises:
setting the BSS Color Disable information to a state indicating that the BSS Color is disabled and sending the target radio frame, in response to BSS parameters change count information in an ML information element indicating that a BSS parameter changes.

9. A signal processing method, performed by a station (STA) device, comprising:
receiving a target radio frame sent by a multi-link (ML) access point device; the target radio frame carrying Basic Service Set (BSS) Color Disable information of the ML access point device.

10. The method of claim 9, wherein receiving the target radio frame sent by the ML access point device comprises:
receiving the target radio frame sent by the ML access point device on a communication link with the ML access point device; and/or
receiving the target radio frame broadcast by the ML access point device.

11. The method of claim 10, wherein in response to receiving the target radio frame sent by the ML access point device on a communication link with the ML access point device,
the BSS Color Disable information is carried in an ML information element, the ML information element being carried in the target radio frame.

12. The method of claim 11, wherein the BSS Color Disable information is carried in a per-STA profile subelement or a Link info subelement of the ML information element.

13. The method of claim 10, wherein in response to receiving the target radio frame broadcast by the ML access point device,
the BSS Color Disable information is carried in an enhancements for extremely high throughput (EHT) operation element, the EHT operation element being carried in the target radio frame.

14. The method of claim 13, wherein the BSS Color Disable information is carried in an EHT operation information subelement of the EHT operation element.

15. An access point device, being a multi-link (ML) access point device, comprising:
a sending module, configured to send a target radio frame; the target radio frame carrying Basic Service Set (BSS) Color Disable information of the ML access point device.

16. A station (STA) device, comprising:
a receiving module, configured to receive a target radio frame sent by a multi-link (ML) access point device; the target radio frame carrying Basic Service Set (BSS) Color Disable information of the ML access point device.

17. A signal processing device, applied to a multi-link (ML) access point device, comprising:
a radio frame sending module, configured to send a target radio frame; the target radio frame carrying Basic Service Set (BSS) Color Disable information of the ML access point device.

18. A signal processing device, applied to a station (STA) device, comprising:
a radio frame receiving module, configured to receive a target radio frame sent by a multi-link (ML) access point device; the target radio frame carrying Basic Service Set (BSS) Color Disable information of the ML access point device.

19. An electronic device, comprising:
a memory;
a processor; and
a computer program stored in the memory and executable by the processor;
wherein when executing the program, the processor is configured to perform the method of any one of claims 1 to 14.

20. A computer-readable storage medium, having a computer program stored thereon, wherein when the computer program is executed by a processor, the method of any one of claims 1 to 14 is performed.
